# EUROPÄISCHE PATENTSCHRIFT

(11) **EP 0 648 080 B1**
(45) Veröffentlichungstag und Bekanntmachung des Hinweises auf die Patenterteilung: **26.03.1997**
(21) Anmeldenummer: 93915815.0
(22) Anmeldetag: 06.07.1993
(51) Int. Cl.: A23J 7/00, C11B 1/10

(54) **VERFAHREN ZUR ENTÖLUNG VON ROHLECITHIN**
PROCESS FOR REMOVING OIL FROM RAW LECITHIN
PROCEDE DE DESHUILAGE DE LECITHINE BRUTE

(30) Priorität: 06.07.1992 DE 4222153
(43) Veröffentlichungstag der Anmeldung: 19.04.1995
(73) Patentinhaber: Peter, Siegfried, Prof. Dr., D-91080 Uttenreuth-Weiher (DE)
(72) Erfinder: PETER, Siegfried, D-91080 Uttenreuth-Weiher (DE); CZECH, Bernd, D-91054 Erlangen (DE); WEIDNER, Eckard, D-91056 Erlangen (DE); ZHANG, Zhenfeng, D-91054 Erlangen (DE)
(74) Vertreter: Weinhold, Peter, Dr.
(86) Internationale Anmeldenummer: EP9301750
(87) Internationale Veröffentlichungsnummer: WO9401004

(56) Entgegenhaltungen:
- EP-A- 0 156 374
- EP-A- 0 259 836
- EP-A- 0 450 378
- DE-B- 1 069 629

## Beschreibung

Die Erfindung bezieht sich auf ein Verfahren zur Gewinnung von Lecithin aus Öl und Lecithin enthaltenden Gemischen durch Extraktion mit einem mindestens einen Kohlenwasserstoff umfassenden Extraktionsmittel.

Unter dem im Handel als Lecithin bezeichneten Gemisch aus Phosphatiden wird eine Gruppe von Phospholipiden verstanden, die sich aus den Strukturgruppen Glycerin, Fettsäuren, Phosphorsäure und Aminoalkohole bzw. Kohlehydrate zusammensetzt. Sie kommen in fast allen tierischen und pflanzlichen Materialien vor. In reichlichen Mengen sind sie in Gehirnmasse, Eigelb, Ölsaaten, wie beispielsweise Sojaöl und Rapsöl, vorhanden.

Phosphatide pflanzlichen Ursprungs sind im allgemeinen stark ungesättigt. In Lecithinpräparaten tierischen Ursprungs findet man neben den Glycerinestern noch verschiedene Sphingolipide und Plasmalogene als Phosphor enthaltende Verbindungen. Die Hauptbestandteile des Sojalecithins sind Phosphatidylcholin, Phosphatidylethanolamin, Phosphatidylinosit, Phosphatidylserin, Phosphatidsäure, Lysophospholipide und Phytoglykolipide.

In den vegetabilischen Ölen aus Ölsaaten und Getreidesamen, wie z.B. Sojabohnen, Raps, Sonnenblumensamen, Mais, Hanf und Leinsamen, sind Phosphatide in Konzentrationen von 0.2 bis 2 Gew.-% enthalten. Weiterhin werden Eigelb, Hefelipide und Bakterienbiomasse zur Gewinnung von Phosphatiden herangezogen. Alle oben genannten Materialien sind als Quelle von Phosphatidgemischen, auch im erfindungsgemäßen Verfahren, geeignet. Ein Beispiel ist bei der Raffination pflanzlicher Öle und Fette erhaltenes Rohlecithin.

Der größte Teil der im Handel befindlichen Lecithine wird derzeit bei der Verarbeitung von Sojaöl und Rapsöl gewonnen. Sie enthalten das Lecithin in kolloidaler Form.
Dem Öl wird unter Rühren Wasser in genau dosierter Menge zugesetzt und das im Öl enthaltene Lecithin bei erhöhter Temperatur hydratisiert. Das schleimartige Gemisch wird in einem Separator abgetrennt und anschließend in einem Trockenapparat unter Vakuum getrocknet. Auf diese Weise wird zähflüssiges Rohlecithin erhalten.
Dieses durch Extraktion aus Sojabohnen oder Raps im Verlauf der Raffination gewonnene Rohlecithin besteht zu etwa einem Drittel aus Öl und zu etwa zwei Dritteln aus in Aceton unlöslichen Bestandteilen, dem Lecithin. Bei einigen Anwendungen erweist sich der Ölgehalt als störend, so daß eine weitere Aufreinigung erforderlich ist.

Im Rahmen der vorliegenden Erfindung sollen unter dem Begriff Lecithin nicht nur die natürlichen Lecithine sondern auch die in letzter Zeit bekannt gewordenen chemisch modifizierten Lecithine, die sich zunehmenden Interesses erfreuen, verstanden werden.

Die Abtrennung des Öls aus dem Rohlecithin erfolgt nach dem Stand der Technik üblicherweise durch Extraktion mit Aceton. Das als Reinlecithin bezeichnete pulverförmige Produkt hat einen Restölgehalt von 2 bis 4 Gew.-%.
Im Verlauf der Aceton-Extraktion werden eine Fett-Aceton-Lösung und eine Suspension von Phospholipiden in Aceton abgezogen. Durch Zentrifugieren wird die Hauptmenge des Acetons von den Phospholipiden abgetrennt und in den Lösemittelkreislauf zurückgeführt. Das teilweise getrocknete Produkt wird dann in mindestens zwei Schritten vom restlichen Lösemittel befreit. Ein erster Trocknungsschritt erfolgt in einem Wirbelschichttrockner, in welchem die Phospholipide mit Hilfe heißer Luft bei etwa 50 bis 70 °C fluidisiert werden. Dabei wird die Hauptmenge des Acetons entfernt. Zur Beseitigung der letzten Lösemittelreste wird das Produkt anschließend in einem Vakuumtrockenofen getrocknet. Hierbei werden die Phospholipide in dünnen Schichten auf Horden mehrere Stunden lang bei erhöhter Temperatur (50 bis 70 °C) behandelt.
Ein Problem des Aceton-Extraktionsverfahrens sind die Abluftströme aus den Trocknungsprozessen, die erst nach entsprechender Reinigung an die Umwelt abgegeben werden dürfen. Reinlecithin wird nicht nur als emulgierender Lebensmittelzusatz sondern auch in unverdünnter Form als Diätikum verwendet. Deshalb werden an seine Reinheit, z.B. Lösemittelfreiheit, erhöhte Anforderungen gestellt; hierauf ist im Fall von Aceton mit seiner geringen Geruchsschwelle besonders sorgfältig zu achten.

Das durch Aceton-Extraktion erhaltene Lecithin muß bei Temperaturen unterhalb 70 °C getrocknet werden, da sonst thermische Zersetzung der Phospholipide einsetzt. Auch bei diesen Temperaturen entstehen im Verlauf der Trocknung Acetonfolgeprodukte, die die organoleptische Qualität der entölten Phospholipide beeinträchtigen. Als Qualitätsminderungen werden ein heuartiger, dumpfer Geruch und ein stechender Nachgeschmack beschrieben.

Wegen der beschriebenen Nachteile der Reinigung mit Aceton wird seit einiger Zeit nach Alternativen zur Aufarbeitung des Rohlecithins gesucht. Die aufwendige Entfernung des Extraktionsmittels kann z.B. durch Verwendung dichter Gase als Lösemittel vermieden werden.

So beschreiben DE-A 30 11 185 und DE-A 32 29 041 die Entölung von Rohlecithin mit überkritischem dichten Kohlendioxid bzw. Ethan, wobei das Rohlecithin mit dem dichten Gas unter hinsichtlich Druck und Temperatur überkritischen Bedingungen in Kontakt gebracht wird. Dabei geht das Öl bevorzugt in Lösung. Das beladene Gas wird von der Extraktionsstufe in eine Regenerierstufe überführt, in der das beladene Gas durch Druck- und/oder Temperaturänderung in Gas und Extrakt aufgetrennt wird. Das regenerierte Gas wird in die Extraktionsstufe zurückgeführt. Da das Lecithin nach Entfernen der Hauptmenge des Öls sehr pastös und infolgedessen die Stoffübergangsgeschwindigkeit sehr gering wird, ist die Extraktionszeit sehr lang. Außerdem werden Drucke von 35 MPa und darüber benötigt, wodurch das Verfahren unwirtschaftlich wird.

Um die lange Extraktionszeit zu vermeiden, wurde weiterhin der Vorschlag gemacht, die Entölung des Lecithins durch eine feine Verteilung des Rohlecithins im Extraktionsmittel Kohlendioxid in einer Düsenstrecke bei kurzer Kontaktzeit zu realisieren (DE-A 33 29 249). Dabei wird ein pulverförmiges, weißgelbes, ölfreies, geruch- und geschmackloses Lecithin erhalten. Der für die Extraktion nach diesem Verfahren benötigte Druck des Kohlendioxids beträgt 90 MPa. Wegen des hohen Drucks und des geringen Durchsatzes einer Düse ist das Verfahren jedoch mit hohen Kosten verbunden.

EP-A-0156374 beschreibt ein Verfahren zur Gewinnung entölten Reinlecithins aus Rohlecithin durch Extraktion in einem zweiphasigen System öl/Lecithin/Extraktionsmittel. Während der Extraktion verarmt die lecithinreiche Phase an öl und wird dadurch zähflüssig. Um zu verhindern, daß nur ein pastöses, ölhaltiges Lecithin gewonnen wird, wird vorgeschlagen, den Druck im System zu erhöhen. Dies fuhrt gemäß EP-A-0156374 jedoch dazu, daß das System einphasig wird. Zweiphasigkeit wird dadurch erreicht, daß dem System eine zusätzliche Komponente zugefügt wird, in der Lecithin schlecht löslich ist, beispielsweise Kohlendioxid.

In EP-A-0259836 wird ein Extraktionsverfahren zur Gewinnung von Phosphatidylcholin aus einem Phosphatidgemisch beschrieben, in dem Mono- oder Diglyceride von Fettsäuren als Schleppmittel eingesetzt werden. Propan, Propen und Butan können als zusätzliche Schleppmittel im System vorhanden sein.

EP-A-0450378 offenbart ein Verfahren zum Entölen von Rohlecithin. Als überkritische Extraktionsmittel werden u.a. Kohlendioxid, halogenierte und nicht halogenierte Kohlenwasserstoffe und deren Gemische genannt; bevorzugt ist Kohlendioxid. Das Behandlungsgut wird vor der Extraktion mit dem Lösungsmittel beladen und danach in die Extraktionskolonne eingedüst.

Das in DE-B-1069629 beschriebene Verfahren eignet sich nicht zur Gewinnung von Reinlecithin. Es wird lediglich eine dunkle, klebrige Masse erhalten, die mit Phosphatiden, Farbstoffen und weiteren Komponenten verunreinigt ist.

In der DE-A 34 11 755 wird vorgeschlagen, die Entölung von Lecithin mit dichtem Kohlendioxid, dem eine größere Menge Propan als Schleppmittel zugesetzt wird, durchzuführen. Dadurch werden zwei Effekte erzielt: a) der Druck zur Erzeugung hoher Beladungen des Extraktionsmittels wird auf 8 bis 12 MPa herabgesetzt und b) das entölte Lecithin bildet mit einem Extraktionsmittel aus 75 % Propan und 25 % Kohlendioxid in diesem Druckbereich eine flüssige Phase, so daß ein Gegenstromprozeß möglich wird und das entölte Produkt über eine Leitung aus dem Sumpf einer Extraktionskolonne abgezogen werden kann. Das Kohlendioxid ist erforderlich, damit zwei Phasen entstehen. Unter den Bedingungen der Extraktion ist das Gemisch Kohlendioxid/Propan überkritisch. Die Verwendung eines Extraktionsmittelgemisches verursacht jedoch zusätzliche Kosten, da seine Zusammensetzung während des Extraktionsprozesses laufend kontrolliert und justiert werden muß.

In der US-Patentschrift 2,548,434 wird ein Verfahren zur Aufarbeitung von Fett enthaltenden Materialien wie Mehlen von Ölsaaten, Schweinegrieben usw. beschrieben. Die Fette werden mit Hilfe eines flüssigen Kohlenwasserstoffs, der bei Atmosphärendruck gasförmig ist, extrahiert. Die Extraktion findet bei Temperaturen im Bereich von 65 bis 95 °C statt. Die für das Verfahren geeignete Kohlenwasserstoffe sollen demnach in diesem Temperaturbereich einen Dampfdruck von größer als 1 atm besitzen. Das Lösemittelverhältnis in Volumeneinheiten soll etwa 15 bis 30 betragen. Bei einer Dichte des flüssigen Kohlenwasserstoffs von 500 kg/m³ entspricht das einer Beladung von 3 bis 6 Gew.-%. Für die Extraktion werden im Temperaturbereich von 79 bis 93 °C Drucke im Bereich von 35 bis 45 bar verwendet. Bei Zusatz von Bleicherde zu den Ausgangsmaterialien werden auf diese Weise entfärbte Öle hoher Qualität erhalten. Farbstoffe, Gummibildner und Phosphatide verbleiben in den vegetabilischen oder tierischen Begleitstoffen.

Für das Verfahren sind die Lösungsmittel bei Temperaturen im Bereich von etwa 60 °C unterhalb ihrer kritischen Temperatur bis wenige Grade oberhalb der kritischen Temperatur geeignet. Wird das Extraktionsverfahren zur Aufbereitung von Rohölen eingesetzt, so werden zwei Fraktionen erhalten, von denen die eine frei von Farbstoffen, Gummibildnern und Phosphatiden ist und in der anderen neben den Farbstoffen und Gummibildnern die Phosphatide angereichert sind. Die Phosphatide, die im Ausgangsprodukt in Konzentrationen bis zu 0,5 Gew.-% vorkommen, können dabei bis auf Konzentrationen von 3 bis 5 Gew.-% angereichert werden.

Demgegenüber wird nach dem Verhahren der hier vorliegenden Erfindung bei der Herstellung des Reinlecithins von einem Rohlecithin mit einer Phosphatidkonzentration von 50 bis 70 Gew.-% ausgegangen. In der besagten US-Patentschrift 2,548, 434 wird dagegen kein Weg zur Gewinnung von Reinlecithin aus Rohlecithin angegeben.

Aufgabe der vorliegenden Erfindung war es, ein Verfahren zur Gewinnung von Reinlecithin zur Verfügung zu stellen, das die im Vorangegangenen erwähnten Nachteile nicht aufweist und bei wesentlich geringeren Drucken als bisher und mit hohen Raumzeitausbeuten im wesentlichen ölfreie, in der Lebensmitteltechnik bedenkenlos einsetzbare Reinlecithine liefert.

Gegenstand der Erfindung ist also ein Verfahren zur Gewinnung von Lecithin aus Öl und Lecithin enthaltenden Gemischen durch Extraktion mit einem Extraktionsmittel, welches aus einem oder mehreren Kohlenwasserstoffen besteht, dadurch gekennzeichnet,
daß das Extraktionsmittel ausgewählt wird aus der Gruppe, bestehend aus einem Kohlenwasserstoff mit 3 Kohlenstoffatomen, einem unverzweigten Kohlenwasserstoff mit 4 Kohlenstoffatomen, einem verzweigten Kohlenwasserstoff mit 4 Kohlenstoffatomen und Mischungen daraus,
daß die Extraktion bei einem Druck zwischen 1 und 8 MPa und einer Temperatur zwischen 20 und 100 °C unter Bedingungen durchgeführt wird, unter denen das Extraktionsmittel mit dem Lecithin eine niedrigviskose Lösung bildet und sich im System Lecithin/Öl/Kohlenwasserstoff zwei flüssige Phasen ausbilden, von denen die eine Phase an Öl und die andere Phase an Lecithin angereichert ist,
daß man die beiden Phasen trennt und durch Abtrennen des Extraktionsmittels aus der an Öl angereicherten Phase im wesentlichen lecithinfreies Öl und aus der an Lecithin angereicherten Phase im wesentlichen ölfreies Reinlecithin gewinnt.

Als Extraktionsmittel geeignet sind verzweigte oder unverzweigte leicht flüchtige Kohlenwasserstoffe mit einer Kohlenstoffzahl von 3 und 4 oder Gemische derselben, wobei gesättigte Kohlenwasserstoffe bevorzugt sind. Insbesondere bevorzugt sind solche Kohlenwasserstoffe, die in der Lebensmitteltechnologie unbeschränkt zugelassen sind, beispielsweise Propan und Butan oder deren Gemische, vorzugsweise Propan allein oder mit einem Butangehalt von bis zu 25 Gew.-%. Wegen des geringeren Regelaufwands sind reine Lösemittel gegenüber Lösemittelgemischen bevorzugt.

Soweit nicht genauer spezifiziert, steht "Butan" für n-Butan, iso-Butan und deren Gemische. Handelsübliches Butan besteht üblicherweise aus Mischungen mit wechselnden Anteilen an n- und iso-Butan. Diese Gemische können im erfindungsgemäßen Verfahren ohne weitere Auftrennung in die Isomere entweder als solche oder in Mischungen mit den anderen genannten Kohlenwasserstoffen als Extraktionsmittel eingesetzt werden.

Die für die Extraktion verwendeten Lösemittel sollten bei den in Frage kommenden Prozeßtemperaturen einen hohen Dampfdruck haben. Vorzugsweise besitzen sie eine reduzierte Temperatur im Bereich von 0.7 bis 1. So weist das besonders bevorzugte Extraktionsmittel Propan bei 40 °C eine reduzierte Temperatur von 0.85 auf, Butan eine solche von 0.75.
Die genannten Kohlenwasserstoffe können nach der Extraktion bei tiefer Temperatur ohne Schwierigkeiten abgetrennt werden. Bei Kohlenwasserstoffen, die unterhalb der Extraktionstemperatur sieden, erfolgt die Extraktion beim jeweiligen Dampfdruck oder darüber. Mit Hilfe des Drucks läßt sich bei den obigen bevorzugten Alkanen auch ihre Konzentration im Rohlecithin einfach und zuverlässig steuern.

Die Viskosität von Phosphatid-Öl-Gemischen ist um 2 bis 3 Zehnerpotenzen höher als die der betreffenden Öle. Bei Entfernung des Öls werden die Phosphatide verfestigt bevor das Öl vollständig entfernt ist. Wird flüssiges Propan einem ölfreien Phosphatidgemisch zugesetzt, so beobachtet man, daß erst bei Überschreitung eines bestimmten Druckes ein niedrigviskoses Gemisch entsteht. Dieser Übergang von festem Phosphatid zur niedrigviskosen Lösung erfolgt in Bezug auf den Druck und die Temperatur in einem so schmalen Bereich, daß praktisch von einem "Schmelzpunkt" gesprochen werden kann. Diese "Schmelzdruckkurve" kann beispielsweise bei Propan durch folgende Daten charakterisiert werden. Bei 57 °C erfolgt der Übergang in eine niedrigviskose Lösung bei einem Druck von 30 bar, bei 65 °C bei einem Druck von 40 bar, und bei 70 °C bei einem Druck von 50 bar.

So kann beispielsweise durch eine Erhöhung des Propandrucks auf etwa 30 bar soviel Propan in entöltem Lecithin gelöst werden, daß das üblicherweise plastische Gemisch eine niedrigviskose Flüssigkeit bildet und so auch eine kontinuierliche Gegenstromextraktion ermöglicht wird. Jedoch bildet sich eine einzige Phase, wenn der Druck gleich oder höher als der Dampfdruck bei Raumtemperatur ist.

Überraschenderweise wurde nun gefunden, daß sich bei Wahl geeigneter Druck- und Temperaturbedingungen im System Lecithin/Öl/Kohlenwasserstoff zwei flüssige Phasen ausbilden, von denen die leichte Phase an Öl und die schwere Phase an Lecithin angereichert ist.

Druck und Temperatur hängen vom jeweiligen verwendeten Extraktionsmittel und dem eingesetzten Rohlecithin ab.
Mit vermindertem Lecithingehalt steigt die Temperatur an, bei der das System Lecithin/Öl/Kohlenwasserstoff bei gleichbleibendem Druck in zwei Phasen zerfällt.
Im System Lecithin/Sojaöl/Propan (Lecithingehalt im Rohlecithin ca. 65 %) und einem Propandruck von 4 MPa beobachtet man das Auftreten von zwei Phasen bei Temperaturen oberhalb von etwa 52 °C. Im selben System, jedoch bei einem Lecithingehalt von 10 Gew.-%, liegt die Entmischungstemperatur bei 70 °C. Dagegen liegt die Entmischungstemperatur bei entöltem Lecithin und Propan, wiederum bei einem Druck von 4 MPa, bei 32 °C.

Während Öl mit flüssigem Propan im Temperaturbereich von 50 bis 80 °C in jedem Verhältnis mischbar ist, gilt das für Rohlecithin nicht. Wird jedoch die Dichte des Propans durch Erhöhung des Drucks auf 4 MPa bei 50 °C vergrößert, so bildet auch Rohlecithin mit Propan eine flüssige Phase. Bei höheren Temperaturen sind entsprechend höhere Drucke erforderlich. Bei Verwendung von Butan oder Propan/Butan-Gemischen ist der Druck, bei dem sich bei gleicher Temperatur aus dem Extraktionsmittel und entöltem Lecithin eine flüssige Phase bildet, geringer als bei Propan allein.

Generell liegt der im erfindungsgemäßen Verfahren anzuwendende Druck zwischen 1 und 8 MPa, vorzugsweise zwischen 3 und 5 MPa.

Der Temperatur sind durch die thermische Stabilität des Lecithins obere Grenzen gesetzt. Demgemäß wird das erfindungsgemäße Verfahren sinnvollerweise bei Temperaturen im Bereich von 20 bis 100 °C, vorzugsweise bei 30 bis 85 °C und insbesondere bei 50 bis 70 °C, durchgeführt.

Lecithin wird bereits bei Temperaturen oberhalb 70 °C instabil. Es hat sich allerdings überraschenderweise gezeigt, daß mit abnehmender Konzentration des Lecithins im Öl die Temperaturstabilität zunimmt, so daß mit abnehmendem Lecithingehalt höhere Extraktionstemperaturen möglich sind, ohne daS das Lecithin angegriffen wird. Ölfreie Phosphatide sollten jedoch möglichst nicht bei Temperaturen oberhalb 70 °C verarbeitet werden.

Bei der Erzeugung von ölfreiem Lecithin mit Hilfe von flüssigen Kohlenwasserstoffen müssen demnach die folgenden Grenzbedingungen beachtet werden: einerseits die thermische Stabilitätsgrenze und andererseits die Schmelzdruckkurve der ölfreien Phosphatide. Zusätzlich ist zu beachten, daß das Gemisch aus Phosphatiden und Öl in Anwesenheit von Kohlenwasserstoffen bei hohen Drücken einphasig wird. Beispielsweise wird aus Soja gewonnenes Rohlecithin mit einem Ölgehalt von 35 Gew.-% bei 52 °C bei einem Propandruck von 40 bar einphasig.

Überraschenderweise hat es sich als besonders vorteilhaft erwiesen, wenn die Gegenstromextraktion bei einem bestimmten Temperaturprofil durchgeführt wird. Das Temperaturprofil muß natürlich jeweils dem gewählten Arbeitsdruck angepaßt werden. Die Einhaltung eines solchen Temperaturprofils trägt den Einengungen der Betriebsbedingungen durch Schmelzdruckkurve, thermische Stabilitätsgrenze und Auftreten von Einphasigkeit besonders gut Rechnung. Sie beschränkt jedoch die Wahlmöglichkeiten für die Kohlenwasserstoffe auf Propan und die Butane.

Die oben beschriebenen Probleme gelten auch für die Aufarbeitung von chemisch veränderten Phosphatiden, die normalerweise im Gemisch mit Öl anfallen. Die Schmelzdruckkurve der modifizierten Phosphatide unterscheidet sich nicht wesentlich von denen der natürlichen Phosphatide. Chemisch modifizierte Phosphatide können deshalb nach dem Verfahren dieser Erfindung ebenfalls rein erhalten werden.

Zweckmäßigerweise ist bei Einhaltung eines Temperaturprofils die Temperatur im Sumpf der Extraktionsvorrichtung 10 bis 80 °C, vorzugsweise 20 bis 70 °C und insbesondere 30 bis 50 °C, niedriger als am Kopf der Extraktionsvorrichtung. Wie oben erwähnt, reichert sich die leichte Phase zum Kopf der Trennvorrichtung hin an Öl an und wird dadurch weniger temperaturempfindlich. Die Temperatur des Extrakts kann daher über der für Lecithin kritischen Temperatur von etwa 70 °C liegen und beträgt vorzugsweise 60 bis 100 °C. Das Raffinat am unteren Ende der Trennvorrichtung hat vorzugsweise eine Temperatur von 20 bis 60 °C.

Wegen des geringeren Regelaufwands sind, wie bereits erwähnt, reine Lösemittel gegenüber Lösemittelgemischen bevorzugt. Als reines Lösemittel besonders geeignet ist Propan. Zum einen ist es gemäß der Direktive der EG-Kommission 88/344/CEE (Journal officiel des communites europeennes No. L 157/28 vom 24. 6. 1988) als Lösemittel der Gruppe 1 uneingeschränkt zur Anwendung in der Lebensmitteltechnologie geeignet und zum anderen sind für Propan Druck- und Temperaturbereich der Extraktion besonders günstig und ermöglichen so eine wirtschaftliche Extraktion des Rohlecithins.

So zerfällt eine Mischung aus 85 g Rohlecithin und 115 g Propan bei 60 °C und 4 MPa in eine leichte Phase aus 84 Gew.-% Propan und 16 Gew.-% Schwerflüchtigem und in eine schwere Phase aus 31 Gew.-% Propan und 69 Gew.-% Schwerflüchtigem. Das Gelöste in der leichten Phase besteht zu 65 Gew.-% aus Öl und zu 35 Gew.-% aus Phosphatiden. Die schwere Phase enthält Lecithin und Öl im Verhältnis von 6 zu 1 gelöst. Der Trennfaktor ist mit etwa 11 sehr günstig.

Reines Ethan und reines Butan sind als Extraktionsmittel weniger geeignet. Mit Ethan ist die Bildung einer flüssigen Lösung von Phosphatiden in merklicher Konzentration bis zu Drucken von 50 MPa nicht zu verwirklichen. Dies gilt auch für Temperaturen unterhalb der kritischen Temperatur von 28 °C. Ethan kommt daher als alleiniges Lösemittel unter wirtschaftlich attraktiven Bedingungen kaum in Betracht.

Wird Butan als Extraktionsmittel verwendet, steigt die Entmischungstemperatur auf Werte, bei denen das Lecithin bereits instabil ist. Im System Rohlecithin/iso-Butan beträgt die Entmischungstemperatur 100 °C bei 2.2 MPa. Ein Vorteil bei der Verwendung von Butan liegt in der Verminderung des Betriebsdrucks auf etwa 1 bis 3 MPa. Bei sehr kurzen Verweilzeiten könnte eine Überschreitung der Temperatur von 70 °C gegebenenfalls toleriert werden. Doch wird man im allgemeinen Propan vorziehen, um eine Beeinträchtigung der Produktqualität infolge thermischer Beschädigung mit Sicherheit auszuschließen.
Ist auch Butan als reines Lösemittel weniger bevorzugt als Propan, kann es, wie auch die übrigen erwähnten Lösemittel, im Gemisch mit den anderen genannten Kohlenwasserstoffen durchaus als Extraktionsmittel geeignet sein.
Beispielsweise beträgt die Entmischungstemperatur von Propan, dem 25 Gew.-% iso-Butan zugesetzt sind, bei einem Druck von 4 MPa 62 °C. Die Zulauftemperatur beträgt dann zweckmäßig 67 °C. Das Beispiel zeigt, daß, wenn auch reine Lösemittel bevorzugt sind, ein Restgehalt an Butan im Propan die (Gegenstrom)extraktion nicht beeinträchtigt.

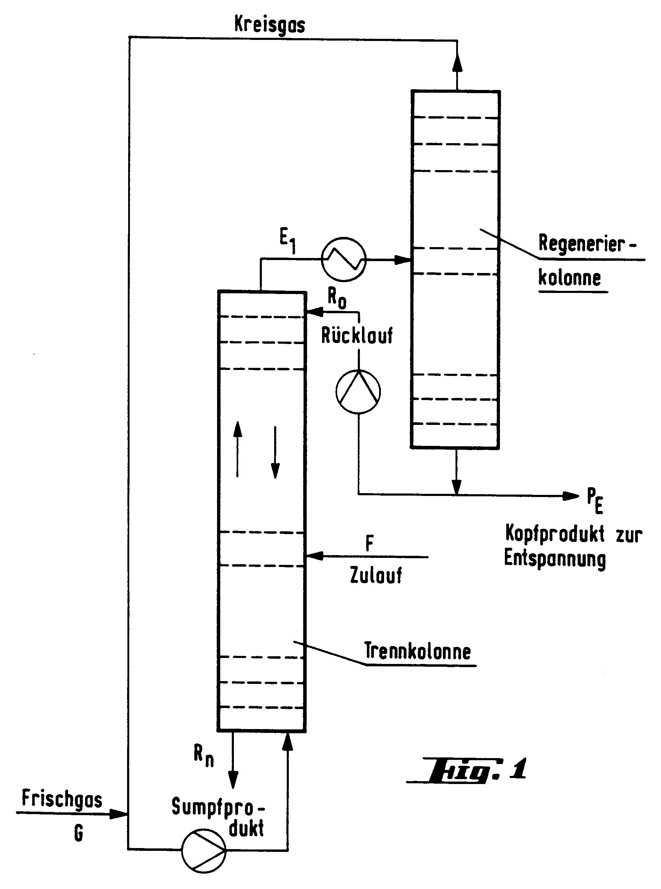

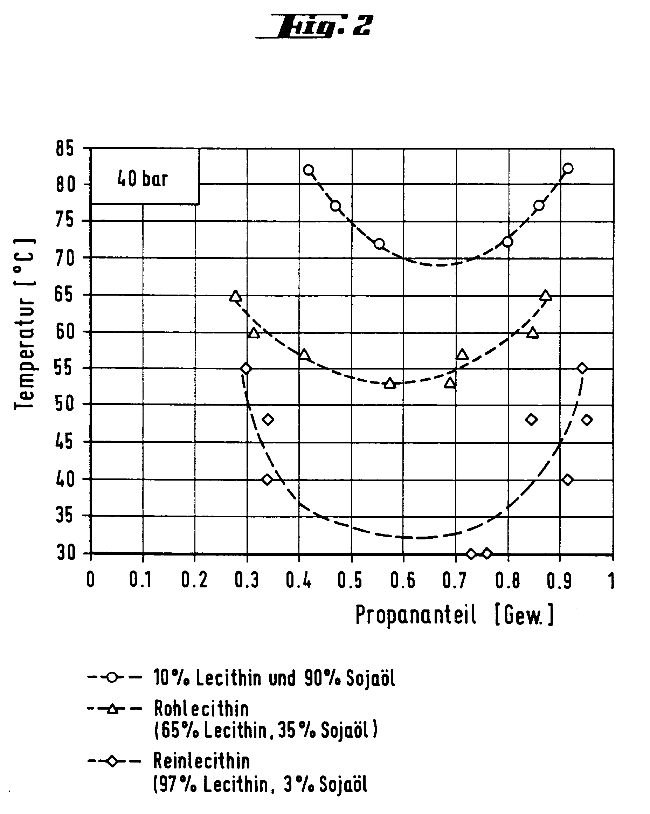

Die Erfindung wird durch die beiliegenden Zeichnungen näher erläutert, und zwar zeigt Abbildung 1 eine für die Durchführung des Verfahrens geeignete Extraktionsvorrichtung und Abbildung 2 die Auftragung der Propankonzentration in den koexistierenden Phasen gegen die Temperatur für verschiedene Lecithin/Öl-Verhältnisse.

Wegen der wirtschaftlichen Vorteile wird das erfindungsgemäße Extraktionsverfahren bevorzugt kontinuierlich im Gegenstrom durchgeführt. Für die Durchführung dieses Prozesses eignet sich die in Abbildung 1 schematisch dargestellte Apparatur. Sie besteht im wesentlichen aus einer Extraktionskolonne (Trennkolonne) und einer Regenerierkolonne.

Das zähflüssige Rohlecithin wird in die Trennkolonne in der gewünschten Höhe, vorzugsweise etwa in der Mitte der Kolonne, zugepumpt. Das Extraktionsmittel wird zweckmäßig am Fuß der Kolonne zugesetzt und durchströmt die Extraktionskolonne von unten nach oben. Druck und Temperatur werden so eingestellt, daß die Mischung in zwei flüssige Phasen zerfällt. Öl und eine geringe Menge Lecithin lösen sich im Extraktionsmittel. Eine Mischung von Öl, Extraktionsmittel und Lecithin verläßt die Extraktionskolonne am Kopf und wird der Regenerierkolonne zugeführt. Durch Erhöhung der Temperatur und/oder Verminderung des Drucks werden in der Regenerierkolonne Bedingungen eingestellt, unter denen das Extraktionsmittel als Dampf vorliegt, d.h. der Druck in der Regenerierkolonne ist niedriger als der Dampfdruck des Extraktionsmittels bei der entsprechenden Temperatur. Infolgedessen fallen die gelösten Stoffe quantitativ aus.

Das Extraktionsmittel verläßt die Regenerierkolonne am Kopf in dampfförmigem Zustand. Es wird in einem Wärmetauscher kondensiert und in die Extraktionskolonne zurückgepumpt.

Ein Teil des in der Regenerierkolonne ausgefallenen Produkts wird zweckmäßig als Rücklauf auf den Kopf der Extraktionskolonne zurückgeführt. Der übrige Teil des extrahierten Öls wird am Sumpf der Regenerierkolonne abgezogen. Durch Druckverminderung und/oder Temperaturerhöhung wird das Extraktionsmittel vom Öl abgetrennt. Im Falle der Extraktionsmittel, die bei Raumtemperatur gasförmig sind, erfolgt die Trennung zweckmäßig durch Entspannung auf Umgebungsdruck. Je nach Größe der Produktion wird das freigesetzte gasförmige Extraktionsmittel rekomprimiert bzw. kondensiert oder verbrannt.

Infolge seiner höheren Dichte fließt das flüssige Lecithin in der Extraktionskolonne nach unten und wird dabei vom Öl befreit. Das so erzeugte Reinlecithin wird am Sumpf der Extraktionskolonne abgezogen. Durch Druckverminderung und/oder Temperaturerhöhung wird das Extraktionsmittel vom Lecithin getrennt. Das entweichende Lösemittel kann, falls gewünscht, durch Komprimieren und/oder Kondensieren zurückgewonnen werden. Das Lecithin fällt als geschmackloses, geruchloses, gelblichweißes, lösemittelfreies Pulver an.

Um während des Extraktionsvorgangs Zweiphasigkeit zu gewährleisten, ist die Extraktionskolonne zweckmäßig mit Einrichtungen zur Erzeugung eines Temperaturprofils ausgerüstet. Wie bereits erwähnt, ist es bevorzugt, die Temperatur am Kopf der Extraktionskolonne 10 bis 80 °C, vorzugsweise 20 bis 70 °C und insbesondere 30 bis 50 °C, höher als die Temperatur am Kolonnensumpf einzustellen. Zur Erzeugung des Temperaturgefälles können beispielsweise Inline-Wärmetauscher dienen. Auf diese Weise wird dafür gesorgt, daß bei gleichbleibendem Druck bei allen Verhältnissen zwischen Öl und Lecithin zwei flüssige Phasen in der Kolonne existieren.

In Abbildung 2 ist die Propankonzentration in den koexistierenden Phasen als Funktion der Temperatur für das Verhältnis von Lecithin zu Öl von 65 zu 35 bzw. 10 zu 90 und 97 zu 3 dargestellt. Im ersten Fall liegt die Entmischungstemperatur des pseudobinären Systems bei etwa 52 °C, im zweiten Fall bei etwa 70 °C. Bei 40 °C und 4 MPa ist beispielsweise im Reinlecithin soviel Propan gelöst, daß das Reinlecithin als niedrigviskose Flüssigkeit vorliegt.

Das erfindungsgemäße Verfahren wird durch die folgenden Beispiele näher erläutert.

### Beispiel 1

Ein Rohlecithin mit 40 Gew.-% Öl und 60 Gew.-% Lecithin wird in einer Vorrichtung nach Fig. 1 aufbereitet. Das Rohlecithin wird etwa in der Mitte der Extraktionskolonne (Trennkolonne) zugepumpt. Die Kolonne ist mit einer Drahtgewebepackung des Typs Sulzer CY und mit Inline-Heizelementen zur Regelung der Temperatur in den verschiedenen Kolonnenabschnitten versehen. Der Verstärkerteil besitzt 8 , der Abtriebsteil 10 theoretische Trennstufen. Als Extraktionsmittel dient Propan bei einem Druck von 4 MPa. Das Extraktionsmittel durchströmt die Kolonne von unten nach oben. Am Zulauf beträgt die Temperatur 65 °C, am Sumpf 45 °C und am Kopf 80 °C. Die Beladung des Propans beträgt etwa 15 Gew.-%. Die Lecithinphase im Sumpf enthält etwa 31 Gew.-% Propan.

Das die Extraktionskolonne am Kopf verlassende beladene Extraktionsmittel wird der Regenerierkolonne etwa in der Mitte zugeführt. Die Regenerierkolonne arbeitet bei 80 °C und 2 MPa. Das Propan ist bei diesen Bedingungen gasförmig, und die im Propan gelösten Stoffe fallen vollständig aus. Der Extrakt wird am Sumpf der Regenerierkolonne abgezogen, und ein Teil des Extrakts (etwa 20 Gew.-%) wird als Rücklauf auf den Kopf der Extraktionskolonne zurückgeführt. Der Rest wird auf Umgebungsdruck entspannt. Dabei wird das Propan entlöst. Nach Abzug noch gelösten Propans besteht der Extrakt zu 98 Gew.-% aus Öl und zu 2 Gew.-% aus Lecithin.

Das vom Öl befreite Raffinat wird am Sumpf der Extraktionskolonne abgezogen. Bei der Entspannung auf Umgebungsdruck entweicht das gelöste Propan. Durch die Verdampfungsenthalpie wird das Produkt abgekühlt. Das so erhaltene feine Lecithinpulver besteht zu 98 Gew.-% aus Phosphatiden und zu 2 Gew.-% aus Begleitstoffen.

### Beispiel 2

Ein Rohlecithin mit 35 Gew.-% Öl und 65 Gew.-% Lecithin wird in einer Vorrichtung entsprechend Fig.1 extrahiert. Das Rohlecithin wird etwa in der Mitte der Extraktionskolonne bei einer Temperatur von 60 °C zugepumpt. Die Kolonne ist mit einer Drahtgewebepackung des Typs Sulzer CY und mit Inline-Heizelementen zur Regelung der Temperatur in den verschiedenen Kolonnenabschnitten versehen. Der Verstärkerteil besitzt 8 , der Abtriebsteil 10 theoretische Trennstufen. Als Extraktionsmittel dient Propan, das 5 Gew.-% iso-Butan enthält, bei einem Druck von 3.5 MPa. Das Extraktionsmittel durchströmt die Kolonne von unten nach oben. Am Zulauf beträgt die Temperatur 60 °C, am Sumpf 40 °C und am Kopf 85 °C. Die Beladung des Extraktionsmittels beträgt etwa 20 Gew.-%. Die Lecithinphase im Sumpf enthält etwa 34 Gew.-% Extraktionsmittel gelöst. Die koexistierende ölreiche flüssige Phase im Kopf besteht je zu etwa der Hälfte aus Extraktionsmittel und schwerflüchtigen Bestandteilen.

Das die Extraktionskolonne am Kopf verlassende beladene Extraktionsmittel wird der Regenerierkolonne etwa in der Mitte zugeführt. Die Regenerierkolonne arbeitet bei 85 °C und 2 MPa. Das Extraktionsmittel ist bei diesen Bedingungen gasförmig, und die gelösten Stoffe fallen vollständig aus. Der Extrakt wird am Sumpf der Regenerierkolonne abgezogen, und ein Teil des Extrakts (etwa 20 Gew.-%) wird als Rücklauf auf den Kopf der Extraktionskolonne zurückgeführt. Der Rest wird auf Umgebungsdruck entspannt. Dabei wird das Extraktionsmittel entlöst. Nach Abzug noch gelösten Extraktionsmittels besteht der Extrakt zu 98 Gew.-% aus Öl und zu 2 Gew.-% aus Lecithin.

Das vom Öl befreite Raffinat wird am Sumpf der Extraktionskolonne abgezogen. Bei der Entspannung auf Umgebungsdruck entweicht das gelöste Extraktionsmittel. Durch die Verdampfungsenthalpie wird das Produkt abgekühlt. Das so erhaltene feine Reinlecithinpulver besteht zu 98 Gew.-% aus Phosphatiden und zu 2 Gew.-% aus Begleitstoffen.

### Beispiel 3

Ein Rohlecithin mit 35 Gew.-% Öl und 65 Gew.-% Lecithin wird in einer Anlage nach Fig. 1 aufgetrennt. Das Rohlecithin wird etwa in der Mitte der Extraktionskolonne (Trennkolonne) zugepumpt. Die Kolonne ist mit einer Sulzerpackung CY und mit Heizelementen zur Regelung der Temperatur in den verschiedenen Kolonnenabschnitten versehen. Als Extraktionsmittel dient Propan bei einem Druck von zunächst 5 MPa. Das Extraktionsmittel durchströmt die Kolonne von unten nach oben. Am Zulauf beträgt die Temperatur 64 °C, am Sumpf 55 °C und am Kopf 85 °C. Bei diesem Druck und diesen Temperaturen ist eine Trennung nicht möglich, da das System Lecithin/Öl/Propan einphasig ist.

Im nächsten Schritt wurde zur Erzeugung von Zweiphasigkeit bei konstantem Temperaturprofil der Druck auf 3 MPa abgesenkt. Durch Beobachtung in einer in die Hochdruckkolonne eingebauten Sichtzelle wurde festgestellt, daß im System tatsächlich 2 Phasen auftreten. Eine kontinuierliche Trennung im Gegenstrom war dennoch nicht möglich, da das Lecithin im unteren Teil der Kolonne als Feststoff anfiel und die Packungen verstopfte.

Durch leichte Druckerhöhung auf 3,5 MPa gelang es, das festgebackene Lecithin wieder zu verflüssigen. Gleichzeitig wurde festgestellt, daß das System zweiphasig ist. Bei diesen Bedingungen wurde die Kolonne im kontinuierlichen Gegenstrom mehrere Tage betrieben.

Ein zuverlässiger störungsfreier Betrieb der Kolonne ist nur zwischen einer Untergrenze, den Verfestigungsbedingungen und einer Obergrenze, der Einphasigkeit möglich. Das vorliegende Beispiel zeigt, wie diese Grenzen im Rahmen einfacher Experimente aufgefunden werden können.

### Beispiel 4

Ein modifiziertes Rohlecithin aus 35 Gew.-% Öl und 65 Gew.-% chemisch verändertem Lecithin wird in einer Anlage nach Fig. 1 aufgetrennt. Die chemische Modifikation des Lecithins erfolgte in der Weise, daß die Wasserstoffatome des Phosphatidylethanolamins durch CH₃-Gruppen substituiert wurden. Es handelt sich hierbei um eine Acetylierung durch die der Gehalt des Lecithins an besonders wertvollem Phosphatidylcholin erhöht wird.

Das acetylierte Rohlecithin wird etwa in der Mitte der Extraktionskolonne (Trennkolonne) zugepumpt. Die Kolonne ist mit einer Sulzerpackung BX und mit Inline-Heizelementen zur Regelung der Temperatur in den verschiedenen Kolonnenabschnitten versehen. Als Extraktionsmittel dient Propan bei einem Druck von 4 MPa. Das Extraktionsmittel durchströmt die Kolonne von unten nach oben. Am Zulauf beträgt die Temperatur 64 °C, am Sumpf 55 °C und am Kopf 85 °C.

Das die Extraktionskolonne verlassende Propan wird der Regenerierkolonne etwa in der Mitte zugeführt. Die Regenerierkolonne arbeitet bei 85 °C und 2,2 MPa. Das Propan ist bei diesen Bedingungen gasförmig, und die gelösten Stoffe fallen vollständig aus. Der Extrakt wird am Sumpf der Regenerierkolonne abgezogen und auf Umgebungsdruck entspannt. Der dabei gewonnene gasfreie Extrakt enthält weniger als 1 % Lecithin.

Das vom Öl befreite Raffinat wird am Sumpf der Extraktionskolonne abgezogen. Als Entnahmevorrichtung wird eine Hohlkegeldüse mit einem Durchmesser von 0,3 mm und einem Sprühwinkel von 60° eingesetzt. Bei der Entspannung auf Umgebungsdruck im sprühstrahl entweicht das gelöste Propan. Durch die Verdampfung des Propans kühlt sich das Produkt ab und fällt in fester Form als feinteiliges, rieselfähiges Pulver an. Das so erhaltene Lecithin ist triglyceridfrei und besteht zu über 95 % aus Phosphatiden.

### Beispiel 5

Ein modifiziertes Rohlecithin aus 35 Gew.-% Öl und 65 Gew.-% hitzestabilisiertem Lecithin wird in einer Anlage nach Fig. 1 aufgetrennt. Die Stabilisierung des Lecithins erfolgt durch Filtration, bei der die Hauptmenge an temperaturempfindlichen eiweiß- und zuckerhaltigen Verunreinigungen abgetrennt wird. Zusätzlich wird ein Teil der Wasserstoffatome des Phosphatidylethanolamins durch CH₃-Gruppen substituiert. Es handelt sich hierbei um eine Teilacetylierung durch die der Gehalt des Lecithins an besonders wertvollem Phosphatidylcholin erhöht wird.

Das modifizierte Rohlecithin wird etwa in der Mitte der Extraktionskolonne (Trennkolonne) zugepumpt. Die Kolonne ist mit einer Sulzerpackung BX und mit Inline-Heizelementen zur Regelung der Temperatur in den verschiedenen Kolonnenabschnitten versehen. Als Extraktionsmittel dient Propan bei einem Druck von 4 MPa. Das Extraktionsmittel durchströmt die Kolonne von unten nach oben. Am Zulauf beträgt die Temperatur 64 °C, am Sumpf 55 °C und am Kopf 85 °C.

Das die Extraktionskolonne verlassende Propan wird der Regenerierkolonne etwa in der Mitte zugeführt. Die Regenerierkolonne arbeitet bei 85 °C und 2,2 MPa. Das Propan ist bei diesen Bedingungen gasförmig, und die gelösten Stoffe fallen vollständig aus. Der Extrakt wird am Sumpf der Regenerierkolonne abgezogen und auf Umgebungsdruck entspannt. Der dabei gewonnene gasfreie Extrakt enthält weniger als 1 % Lecithin.

Das vom Öl befreite Raffinat wird am Sumpf der Extraktionskolonne abgezogen. Als Entnahmevorrichtung wird eine Hohlkegeldüse mit einem Durchmesser von 0,3 mm und einem Sprühwinkel von 60° eingesetzt. Bei der Entspannung auf Umgebungsdruck im Sprühstrahl entweicht das gelöste Propan. Durch die Verdampfung des Propans kühlt sich das Produkt ab und fällt in fester Form als feinteiliges, rieselfähiges Pulver an. Das so erhaltene Lecithin ist triglyceridfrei und besteht zu über 95 % aus Phosphatiden. Es kann in dieser Form direkt angewandt werden oder einer Klassierung und Granulation zugeführt werden.

### Beispiel 6

Ein modifiziertes Rohlecithin aus 35 Gew.-% Öl und 65 Gew.-% Lecithin wird in einer Anlage nach Fig. 1 aufgetrennt. Die chemische Modifikation des Lecithins erfolgte in der Weise, daß die Fettsäurereste an den Phospholipiden mit Hilfe einer Phospholipase in wässriger Lösung hydrolysiert werden. Das so erhaltene, getrocknete Lecithin weist einem hohen Gehalt an Lysophosphatidylcholin (LPC), Lysophosphatidylethanolamin (LPE) und Lysophosphatidylinosit (LPI) auf. Es kann z.B. zur Herstellung von Liposomen in vorteilhafter Weise eingesetzt werden.

Das hydrolysierte Rohlecithin wird etwa in der Mitte der Extraktionskolonne (Trennkolonne) zugepumpt. Die Kolonne ist mit einer Mischer/Abscheiderpackung und mit Inline-Heizelementen zur Regelung der Temperatur in den verschiedenen Kolonnenabschnitten versehen. Als Extraktionsmittel dient Propan bei einem Druck von 4 MPa. Das Extraktionsmittel durchströmt die Kolonne von unten nach oben. Am Zulauf beträgt die Temperatur 65 °C, am Sumpf 55 °C und am Kopf 75 °C.

Das die Extraktionskolonne verlassende Propan wird der Regenerierkolonne etwa in der Mitte zugeführt. Die Regenerierkolonne arbeitet bei 90 °C und 2,2 MPa. Das Propan ist bei diesen Bedingungen gasförmig, und die gelösten Stoffe fallen vollständig aus. Der Extrakt wird am Sumpf der Regenerierkolonne abgezogen und auf Umgebungsdruck entspannt. Der dabei gewonnene gasfreie Extrakt enthält weniger als 1 % Lecithin.

Das vom Öl befreite Raffinat wird am Sumpf der Extraktionskolonne abgezogen. Als Entnahmevorrichtung wird ein regelbares Entnahmeventil mit anschließendem Diffusor eingesetzt. Bei der Entspannung auf Umgebungsdruck im Sprühstrahl entweicht das gelöste Propan. Durch die Verdampfung des Propans kühlt sich das Produkt ab und fällt in fester Form als feinteiliges, rieselfähiges Pulver an. Das so erhaltene Lecithin ist triglyceridfrei und besteht zu über 95 % aus Phosphatiden.

### Beispiel 7

Bei der Totalextraktion von Eigelbpulver mit hochkonzentriertem wässrigen Ethanol wird ein Gemisch aus 70 % Triglyceriden, 5 % Cholesterin und 25 % Phospholipiden erhalten. Die Phospholipide bestehen im Unterschied zu denen aus vegetabilischen Quellen im wesentlichen aus Phosphatidylcholin (>70 %). Der Rest ist im wesentlichen Phosphatidylethanolamin. Andere Phosphatide, wie z.B. Phosphatidylinosit sind nicht oder nur in Spuren enthalten. Für Anwendungen in der Diätetik und in Babynahrung ist ein ölfreies Produkt von besonderem Interesse.

Ein Totalextrakt aus Eigelbpulver wird in einer Anlage nach Fig. 1 aufgetrennt. Das Ausgangsprodukt wird etwa in der Mitte der Extraktionskolonne (Trennkolonne) zugepumpt. Die Kolonne ist mit einer Sulzerpackung BX und mit Inline-Heizelementen zur Regelung der Temperatur in den verschiedenen Kolonnenabschnitten versehen. Als Extraktionsmittel dient Propan bei einem Druck von 4 MPa. Das Extraktionsmittel durchströmt die Kolonne von unten nach oben. Am Zulauf beträgt die Temperatur 69 °C, am Sumpf 55 °C und am Kopf 85 °C.

Das die Extraktionskolonne verlassende Propan wird der Regenerierkolonne etwa in der Mitte zugeführt. Die Regenerierkolonne arbeitet bei 85 °C und 2,2 MPa. Das Propan ist bei diesen Bedingungen gasförmig, und die gelösten Stoffe fallen vollständig aus. Der Extrakt wird am Sumpf der Regenerierkolonne abgezogen und auf Umgebungsdruck entspannt. Der dabei gewonnene gasfreie Extrakt enthält weniger als 1 % Lecithin. Der Gehalt an Cholesterin liegt bei etwa 5 %.

Das vom Öl befreite Raffinat wird am Sumpf der Extraktionskolonne abgezogen. Als Entnahmevorrichtung wird eine Hohlkegeldüse mit einem Durchmesser von 0,3 mm und einem Sprühwinkel von 60° eingesetzt. Bei der Entspannung auf Umgebungsdruck im Sprühstrahl entweicht das gelöste Propan. Durch die Verdampfung des Propans kühlt sich das Produkt ab und fällt in fester Form als Pulver an. Aufgrund des hohen Phosphatidylcholin-Gehalts neigt das Produkt zu Verbackungen. Durch Zugabe von wenigen Prozent Trennhilfsmitteln zum Rohlecithin wird ein rieselfähiges Raffinat erhalten. Als Trennhilfsmittel können z.B. Stärke oder Magnesiumstearat, Aerosil oder andere eingesetzt werden. Das so erhaltene Lecithin ist triglyceridfrei und besteht zu über 90 % aus Phosphatiden. Es enthält noch etwa 7 % Cholesterin.

### Beispiel 8

Bei der Totalextraktion von flüssigem Eigelb wird ein Gemisch aus 70 % Triglyceriden, 5 % Cholesterin und 25 % Phospholipiden erhalten. Die Phospholipide bestehen im Unterschied zu denen aus vegetabilischen Quellen im wesentlichen aus Phosphatidylcholin (>70 %). Der Rest ist im wesentlichen Phosphatidylethanolamin. Andere Phosphatide, wie z.B. Phosphatidylinosit sind nicht oder nur in Spuren enthalten. Für Anwendungen in der Diätetik und in Babynahrung ist ein ölfreies Produkt von besonderem Interesse.

Ein Totalextrakt aus flüssigem Eigelb wird in einer Anlage nach Fig. 1 aufgetrennt. Das Ausgangsprodukt wird etwa in der Mitte der Extraktionskolonne (Trennkolonne) zugepumpt. Die Kolonne ist mit einer Sulzerpackung BX und mit Inline-Heizelementen zur Regelung der Temperatur in den verschiedenen Kolonnenabschnitten versehen. Als Extraktionsmittel dient Propan bei einem Druck von 4 MPa. Das Extraktionsmittel durchströmt die Kolonne von unten nach oben. Am Zulauf beträgt die Temperatur 69 °C, am Sumpf 55 °C und am Kopf 85 °C.

Das die Extraktionskolonne verlassende Propan wird der Regenerierkolonne etwa in der Mitte zugeführt. Die Regenerierkolonne arbeitet bei 85 °C und 2,2 MPa. Das Propan ist bei diesen Bedingungen gasförmig, und die gelösten Stoffe fallen vollständig aus. Der Extrakt wird am Sumpf der Regenerierkolonne abgezogen und auf Umgebungsdruck entspannt. Der dabei gewonnene gasfreie Extrakt enthält weniger als 1 % Lecithin. Der Gehalt an Cholesterin liegt bei etwa 5 %.

Das vom Öl befreite Raffinat wird am Sumpf der Extraktionskolonne abgezogen. Als Entnahmevorrichtung wird eine Hohlkegeldüse mit einem Durchmesser von 0,3 mm und einem Sprühwinkel von 60° eingesetzt. Bei der Entspannung auf Umgebungsdruck im sprühstrahl entweicht das gelöste Propan. Durch die Verdampfung des Propans kühlt sich das Produkt ab und fällt in fester Form als Pulver an. Aufgrund des hohen Phosphatidylcholin-Gehalts neigt das Produkt zu Verbackungen. Durch Zugabe von wenigen Prozent Trennhilfsmitteln zum Rohlecithin wird ein rieselfähiges Raffinat erhalten. Als Trennhilfsmittel können z.B. Stärke oder Magnesiumstearat, Aerosil oder andere eingesetzt werden. Das so erhaltene Lecithin ist triglyceridfrei und besteht zu über 90 % aus Phosphatiden. Es enthält noch etwa 7 % Cholesterin.

## Patentansprüche

1. Verfahren zur Gewinnung von Lecithin aus Öl und Lecithin enthaltenden Gemischen durch Extraktion mit einem Extraktionsmittel, welches aus einem oder mehreren Kohlenwasserstoffen besteht, dadurch gekennzeichnet,
daß das Extraktionsmittel ausgewählt wird aus der Gruppe, bestehend aus einem Kohlenwasserstoff mit 3 Kohlenstoffatomen, einem unverzweigten Kohlenwasserstoff mit 4 Kohlenstoffatomen, einem verzweigten Kohlenwasserstoff mit 4 Kohlenstoffatomen und Mischungen daraus,
daß die Extraktion bei einem Druck zwischen 1 und 8 MPa und einer Temperatur zwischen 20 und 100 °C unter Bedingungen durchgeführt wird, unter denen das Extraktionsmittel mit dem Lecithin eine niedrigviskose Lösung bildet und sich im System Lecithin/Öl/Kohlenwasserstoff zwei flüssige Phasen ausbilden, von denen die eine Phase an Öl und die andere Phase an Lecithin angereichert ist,
daß man die beiden Phasen trennt und durch Abtrennen des Extraktionsmittels aus der an Öl angereicherten Phase im wesentlichen lecithinfreies Öl und aus der an Lecithin angereicherten Phase im wesentlichen ölfreies Reinlecithin gewinnt.

2. Verfahren nach Anspruch 1, dadurch gekennzeichnet, daß das Extraktionsmittel ausgewählt wird aus der Gruppe, bestehend aus Propan, Butan und Mischungen daraus.

3. Verfahren nach Anspruch 2, dadurch gekennzeichnet, daß man als Extraktionsmittel Propan oder eine Mischung von Propan mit bis zu 25 Gew.-% Butan einsetzt.

4. Verfahren nach mindestens einem der Ansprüche 1 bis 3, dadurch gekennzeichnet, daß die Extraktion bei einem Druck zwischen 3 und 5 MPa durchgeführt wird.

5. Verfahren nach mindestens einem der Ansprüche 1 bis 4, dadurch gekennzeichnet, daß die Extraktion bei einer Temperatur zwischen 30 und 85 °C, insbesondere zwischen 50 und 70 °C, durchgeführt wird.

6. Verfahren nach mindestens einem der Ansprüche 1 bis 5, dadurch gekennzeichnet, daß man als Ausgangsprodukt natürliches oder chemisch modifiziertes Lecithin enthaltende Gemische pflanzlichen oder tierischen Ursprungs, vorzugsweise pflanzlichen Ursprungs, die weiterhin Öle bzw. Fette enthalten, einsetzt, insbesondere vegetabilische Öle aus Ölsaaten und Getreidesamen, wie Sojabohnen, Raps, Sonnenblumensamen, Mais, Hanf und Leinsamen.

7. Verfahren nach mindestens einem der Ansprüche 1 bis 6, dadurch gekennzeichnet, daß man die Extraktion in einer Trennkolonne (Extraktionskolonne), vorzugsweise kontinuierlich in einem Gegenstromprozeß, durchführt, wobei am Kolonnensumpf ein lecithinreicher Extrakt und am Kolonnenkopf ein ölreicher Extrakt abgezogen werden.

8. Verfahren nach Anspruch 7, dadurch gekennzeichnet, daß man in der Trennkolonne ein Temperaturprofil erzeugt, derart, daß die Temperatur am Kopf der Kolonne 10 bis 80 °C, vorzugsweise 20 bis 70 °C und insbesondere 30 bis 50 °C, über der des Kolonnensumpfes liegt.

9. Verfahren nach Anspruch 8, dadurch gekennzeichnet, daß die Temperatur des Raffinats beim Austritt am Kolonnensumpf 20 bis 60 °C und die des Extrakts beim Austritt am Kolonnenkopf 60 bis 100 °C beträgt.

10. Verfahren nach mindestens einem der Ansprüche 7 bis 9, dadurch gekennzeichnet, daß der am Kolonnenkopf der Extraktionskolonne abgezogene ölreiche Extrakt in eine Regenerierkolonne überführt und dort durch Druckverminderung und/oder Temperaturerhöhung in Extraktionsmittel und Produkt getrennt wird.

11. Verfahren nach Anspruch 10, dadurch gekennzeichnet, daß ein Teil des am Kolonnensumpf der Regenerierkolonne erhaltenen Produkts als Rücklauf in die Extraktionskolonne, vorzugsweise auf deren Kopf, zurückgeführt wird.

12. Verfahren nach mindestens einem der Ansprüche 7 bis 9, dadurch gekennzeichnet, daß die am Kolonnensumpf abgezogene lecithinreiche Phase durch Druckverminderung und/oder Temperaturerhöhung in im wesentlichen ölfreies Reinlecithin und Extraktionsmittel getrennt wird.

13. Verfahren nach einem oder beiden der Ansprüche 10 und 12, dadurch gekennzeichnet, daß das durch Druckverminderung und/oder Temperaturerhöhung abgetrennte Extraktionsmittel rekomprimiert und/oder kondensiert wird, um gegebenenfalls zurückgeführt zu werden.

## Claims

1. Process for recovering lecithin from oil and lecithin-containing mixtures by extraction using an extracting agent which consists of one or more hydrocarbons, characterised in that the extracting agent is selected from the group comprising a hydrocarbon having 3 carbon atoms, an unbranched hydrocarbon having 4 carbon atoms, a branched hydrocarbon having 4 carbon atoms and mixtures thereof, in that the extraction is carried out at a pressure between 1 and 8 MPa and a temperature between 20 and 100°C under conditions under which the extracting agent forms a low-viscosity solution with the lecithin, and two liquid phases are formed in the system lecithin/oil/hydrocarbon, of which one phase is enriched in oil and the other phase is enriched in lecithin, in that the two phases are separated and essentially lecithin-free oil is recovered from the oil-enriched phase and essentially oil-free pure lecithin is recovered from the lecithin-enriched phase by separating off the extracting agent.

2. Process according to claim 1, characterised in that the extracting agent is selected from the group consisting of propane, butane and mixtures thereof.

3. Process according to claim 2, characterised in that propane or a mixture of propane with up to 25 wt.% of butane is used as extracting agent.

4. Process according to at least one of claims 1 to 3, characterised in that the extraction is carried out at a pressure between 3 and 5 MPa.

5. Process according to at least one of claims 1 to 4, characterised in that the extraction is carried out at a temperature between 30 and 85°C, particularly between 50 and 70°C.

6. Process according to at least one of claims 1 to 5, characterised in that natural or chemically modified lecithin-containing mixtures of vegetable or animal origin, Preferably of vegetable origin, which also contain oils or fats, particularly vegetable oils from oil seeds and cereal seeds, such as soya beans, rape, sunflower seeds, maize, hemp and linseed, are used as starting product.

7. Process according to at least one of claims 1 to 6, characterised in that the extraction is carried out in a separating column (extraction column), preferably continuously in a counter-current process, wherein a lecithin-rich extract is withdrawn at the column sump and an oil-rich extract is withdrawn at the column head.

8. Process according to claim 7, characterised in that a temperature profile is produced in the separating column such that the temperature at the head of the column is 10 to 80°C, preferably 20 to 70°C, and particularly 30 to 50°C, above that of the column sump.

9. Process according to claim 8, characterised in than the temperature of the refined product is 20 to 60°C when leaving the column sump and that of the extract is 60 to 100°C when leaving the column head.

10. Process according to at least one of claims 7 to 9, characterized in that the oil-rich extract withdrawn at the column head of the extraction column is transferred to a regenerating column and is separated there into extracting agent and product by reducing pressure and/or increasing temperature.

11. Process according to claim 10, characterised in that some of the product obtained at the column sump of the regenerating column is returned to the extraction column, preferably to its head, as reflux.

12. Process according to at least one of claims 7 to 9, characterised in that the lecithin-rich phase withdrawn at the column sump is separated into essentially oil-free pure lecithin and extracting agent by reducing pressure and/or increasing temperature.

13. Process according to one or both of claims 10 and 12, characterised in that the extracting agent separated off by reducing pressure and/or increasing temperature is recompressed and/or condensed in order to be returned if required.

## Revendications

1. Procédé d'extraction de la lécithine de l'huile et des mélanges contenant de la lécithine, par extraction avec un agent d'extraction qui est constitué d'un ou de plusieurs hydrocarbures, caractérisé en ce que
l'agent d'extraction est choisi dans le groupe formé d'un hydrocarbure à 3 atomes de carbone, d'un hydrocarbure non ramifié à 4 atomes de carbone, d'un hydrocarbure ramifié à 4 atomes de carbone et de leurs mélanges,
en ce que l'extraction s'effectue sous une pression entre 1 et 8 MPa et à une température entre 20 et 100°C, dans des conditions dans lesquelles l'agent d'extraction forme avec la lécithine une solution faiblement visqueuse et qu'il se forme dans le système lécithine/huile/hydrocarbure deux phases liquides, dont l'une est une phase enrichie en huile et l'autre une phase enrichie en lécithine,
en ce que l'on sépare les deux phases et que l'on obtient, par séparation de l'agent d'extraction, une huile essentiellement exempte de lécithine à partir de la phase enrichie en huile et une lécithine pure essentiellement exempte d'huile à partir de la phase enrichie en lécithine.

2. Procédé selon la revendication 1, caractérisé en ce que l'agent d'extraction est choisi dans le groupe constitué du propane, du butane et de leurs mélanges.

3. Procédé selon la revendication 2, caractérisé en ce que l'on utilise, comme agent d'extraction, du propane ou un mélange de propane avec jusqu'à 25% en poids de butane.

4. Procédé selon au moins l'une des revendications 1 à 3, caractérisé en ce que l'on effectue l'extraction sous une pression comprise entre 3 et 5 MPa.

5. Procédé selon au moins l'une des revendications 1 à 4 caractérisé en ce que l'on effectue l'extraction à une température comprise entre 30 et 85°C et, en particulier, entre 50 et 70°C.

6. Procédé selon au moins l'une des revendications 1 à 5 caractérisé en ce que l'on utilise comme matière première des mélanges contenant de la lécithine naturelle ou chimiquement modifiée d'origine végétale ou animale et, de préférence, d'origine végétale, qui contiennent en outre des huiles ou des graisses et, en particulier, des huiles végétales provenant de graines oléagineuses et de semences de céréales telles que les gousses de soja, le colza, les graines de tournesol, le maïs, le chanvre et les graines de lin.

7. Procédé selon au moins l'une des revendications 1 à 6 caractérisé en ce que l'on effectue l'extraction dans une colonne de séparation (colonne d'extraction) de préférence en continu et selon un procédé à contre-courant, avec soutirage en pied de colonne d'un extrait riche en lécithine et, en tête de colonne, d'un extrait riche en huile.

8. Procédé selon la revendication 7, caractérisé en ce que l'on réalise un profil de température dans la colonne de séparation, de façon que la température en tête de la colonne soit de 10 à 80°C, de préférence de 20 à 70°C et, en particulier, de 30 à 50°C supérieure à la température en pied de colonne.

9. Procédé selon la revendication 8, caractérisé en ce que la température du produit raffiné à la sortie du pied de colonne est comprise entre 20 et 60°C et en ce que celle de l'extrait à la sorite de la tête de colonne est comprise entre 60 et 100°C.

10. Procédé selon au moins l'une des revendications 7 à 9, caractérisé en ce que l'extrait riche en huile soutiré en tête de la colonne d'extraction est amené à une colonne de régénération et y est séparé en agent d'extraction et en produit par diminution de pression et/ou augmentation de température.

11. Procédé selon la revendication 10, caractérisé en ce qu'une partie du produit obtenu au pied de la colonne de régénération est recyclée comme reflux dans la colonne d'extraction et, de préférence, en tête de celle-ci.

12. Procédé selon au moins l'une des revendications 7 à 9, caractérisé en ce que la phase riche en lécithine soutirée en pied de la colonne est séparée en lécithine pure essentiellement exempte d'huile et en agent d'extraction, par diminution de pression et/ou augmentation de température.

13. Procédé selon l'une des revendications 10 ou 12 ou selon ces deux revendications, caractérisé en ce que l'agent d'extraction séparé par diminution de pression et/ ou augmentation de température est re-comprimé et/ou condensé afin d'être éventuellement recyclé.
